# EUROPÄISCHE PATENTSCHRIFT

(11) **EP 0 573 463 B1**
(45) Veröffentlichungstag und Bekanntmachung des Hinweises auf die Patenterteilung: **14.05.1997**
(21) Anmeldenummer: 92904766.0
(22) Anmeldetag: 18.02.1992
(51) Int. Cl.: C08G 2/14, C08G 2/18, C11D 3/37

(54) **VERWENDUNG VON POLYACETALEN IN WASCH- UND REINIGUNGSMITTELN**
USE OF POLYACETALS IN WASHING AND CLEANING AGENTS
UTILISATION DE POLYACETALS DANS DES PRODUITS DE LAVAGE ET DES DETERGENTS

(30) Priorität: 28.02.1991 DE 4106354
(43) Veröffentlichungstag der Anmeldung: 15.12.1993
(73) Patentinhaber: BASF Aktiengesellschaft, 67063 Ludwigshafen (DE)
(72) Erfinder: FUNHOFF, Angelika, D-6900 Heidelberg (DE); SEELMANN-EGGEBERT, Hans-Peter, D-6905 Schriesheim (DE); HARTMANN, Heinrich, D-6703 Limburgerhof (DE); BAUR, Richard, D-6704 Mutterstadt (DE); SCHWENDEMANN, Volker, D-6730 Neustadt (DE); KUD, Alexander, D-6509 Eppelsheim (DE); BERTLEFF, Werner, D-6806 Viernheim (DE)
(86) Internationale Anmeldenummer: EP9200332
(87) Internationale Veröffentlichungsnummer: WO9215629

(56) Entgegenhaltungen:
- JOURNAL OF POLYMER SCIENCE, POLYMER CHEMISTRY EDITION. Bd. 17, Nr. 9, 9. September 1979, NEW YORK US Seiten 2999 - 3007; K.HASHIMOTO E.A.: 'EQUILIBRIUM ANIONIC POLYMERIZATION OF BETA-METHOXYCARBONYLPROPIONALDEHYDE'
- MACROMOLECULAR SYNTHESES. Bd. 7, 1979, NEW YORK US Seiten 23 - 25; K.KBAYASHI E.A.: 'POLY(CARBOMETHOXYETHYLOXYMETHYLENE)'

## Beschreibung

Die Erfindung betrifft die Verwendung von Polyacetalen, die Einheiten der Formel 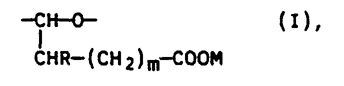 in der
- R: = H, C₁- bis C₄-Alkyl, COOM
- M: = C₁- bis C₄-Alkyl-, Alkalimetall-, Ammonium- und Alkanolamingruppe,
- m: = 0 bis 9
bedeuten,
einpolymerisiert enthalten, als Zusatz zu phosphatarmen oder phosphatfreien Wasch- und Reinigungsmitteln.

Aus der EP-B 0 001 004 sind polymere Acetalcarboxylate bekannt, die durch Polymerisieren von Glyoxylsäureestern in Gegenwart von Initiatoren erhältlich sind. Diese Polymerisate enthalten als charakteristisches Merkmal mindestens 4 Einheiten der Formel 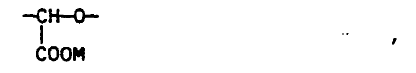 wobei M für Alkalimetall-, Ammonium-, C₁- bis C₄-Alkyl- und Alkanolamingruppen steht.

Diese Polymeren werden in Mengen von mindestens 1 Gew.% als Builder in Waschmitteln eingesetzt. Die bekannten polymeren Acetalcarboxylate hydrolysieren relativ rasch in saurem Medium unter Bildung von Komponenten, die biologisch abbaubar sind. Die Herstellung der Polymeren ist jedoch aufwendig, weil man die Monomeren, d.h. die Formylester, zunächst durch Erhitzen der Halbacetalester von Glyoxylsäure in Gegenwart von Phosphorpentoxid herstellen und reinigen muß. Die gereinigten Aldehydester werden dann mit geeigneten Initiatoren, wie starken Lewis-Säuren oder Diethylnatriummalonat polymerisiert. Die dabei entstehenden Polymerisate werden an den Endgruppen mit Strukturen verschlossen, die dem Polymerisat, die für den Einsatz in Waschmitteln erforderliche Stabilität in alkalischem Medium verleihen.

Aus Journal of Polymer Science, Polymer Chemistry Edition, Bd. 17, 2999-3007 (1979) und aus Macromolecular Syntheses, Bd. 7, 23-25 (1979) ist die Polymerisation von β-Methoxycarbonylpropionaldehyd bekannt.

Der vorliegenden Erfindung liegt die Aufgabe zugrunde, neue Waschmitteladditive zur Verfügung zu stellen.

Die Aufgabe wird erfindungsgemäß gelöst mit der Verwendung von Polyacetalen, die Einheiten der Formel 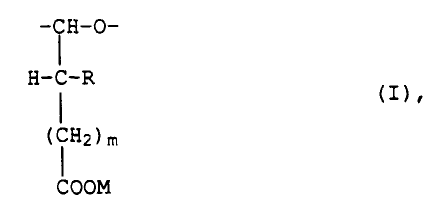 in der
- R: = H, C₁- bis C₄-Alkyl, COOM
- M: = C₁- bis C₄-Alkyl, Alkalimetall-, Ammonium- und Alkanolamingruppe,
- m: = 0 bis 9
bedeuten, und die gegebenenfalls bis zu 50 mol-% mindestens eines Comonomers aus der Gruppe der C₁- bis C₁₀-Aldehyde, C₂- bis C₄-Alkylenoxide, Epihalogenhydrine, Epoxybernsteinsäure und Verbindungen der Formel 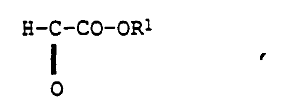 in der
- R¹: = C₁- bis C₄-Alkyl
bedeutet, einpolymerisiert enthalten und K-Werte (bestimmt nach H. Fikentscher in 1 gew.-%iger wäßriger Lösung bei 25°C und pH 7 am Natriumsalz) von mindestens 8,5 haben, als Zusatz zu Waschmitteln mit reduziertem Phosphatgehalt von weniger als 25 Gew.-% Natriumtriphosphat oder phosphatfreien Wasch- und Reinigungsmitteln in Mengen von 0,1 bis 30 Gew.-%, bezogen auf die jeweiligen Formulierungen.

Die Verbindungen der Formel II sind bekannte Stoffe. Formylester der Formel II können beispielsweise durch Hydroformylierung von monoethylenisch ungesättigten Carbonsäureestern mit Kohlenmonoxid und Wasserstoff bei höheren Temperaturen und Drücken hergestellt werden, vgl. beispielsweise J. Falbe, New Synthesis with Carbon monoxide, Springer verlag 1980 oder J. Wender und P. Pino, Organic Synthesis via Metal Carbonyls, J. Wiley & Sons, 1977. Bevorzugte Polyacetale enthalten solche Einheiten der Formel I, in der
R = H oder COOM
m = 0 bis 2
M = Methyl, Ethyl, Na, K, Ammonium- oder Ethanolamingruppe
bedeuten. Die Polyacetale können bis zu 50, vorzugsweise bis zu 30 Mol.% mindestens eines Comonomeren aus der Gruppe der C₁- bis C₁₀-Aldehyde, C₂- bis C₄-Alkylenoxide, Epihalogenhydrine, Epoxybernsteinsäure und Verbindungen der Formel 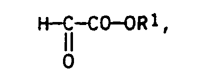 in der R¹ für C₁- bis C₄-Alkyl steht, einpolymerisiert enthalten. Die Polyacetale, die Einheiten der Formel I einpolymerisiert enthalten, haben K-Werte (bestimmt nach H. Fikentscher in 1 gew.%iger wäßriger Lösung bei 25°C und pH 7 am Natriumsalz) von mindestens 8,5. In Abhängigkeit von der Reinheit der Monomeren, die bei der Polymerisation eingesetzt werden und der Polymerisationsbedingungen erhält man Polyacetale mit K-Werten bis zu 200 oder darüber. Die Anzahl n der Monomereinheiten der Formel I in den Polyacetalen liegt bei mindestens 4 und kann bis zu etwa 500 betragen und liegt vorzugsweise in dem Bereich von 4 bis 120.

Die Polyacetale werden durch Polymerisieren der Verbindungen der Formel 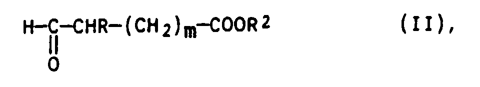 in der R² vorzugsweise für Methyl oder Ethyl, R vorzugsweise für H, und m vorzugsweise für 1 bis 4 steht,
gegebenenfalls mit einem oder mehreren der oben genannten Comonomeren hergestellt. Die Polymerisation wird in Substanz oder in einem Lösemittel durchgeführt. Als Lösemittel eignen sich beispielsweise halogenierte Kohlenwasserstoffe, wie Dichlormethan und Trichlorethan, aromatische Kohlenwasserstoffe, wie Benzol, Toluol, Isopropylbenzol und Xylol, Ether wie Diethylether, Dioxan und Tetrahydrofuran oder Diethylenglykoldimethylether sowie Dimethylformamid und Acetonitril. Bevorzugt angewendete Lösemittel sind Ether, Acetonitril und Dichlormethan. Die Lösemittel sollen möglichst wasserfrei oder weitgehend wasserfrei sein. Auch die Monomeren sollten wasserfrei sein. Es empfiehlt sich, sie vor der Polymerisation mit Hilfe einer Destillation zu reinigen. Der Wassergehalt der polymerisierenden Mischung liegt üblicherweise unterhalb von 0,1 Gew.%. Die Polymerisation wird vorzugsweise unter einer Inertgasatmosphäre, z.B. unter Stickstoff, Argon, Helium oder Neon durchgeführt.

Als Initiatoren eignen sich beispielsweise Amine, wie Triethylamin oder der 2-Hydroxypyridin-H₂O-komplex, starke Lewis-Säuren, wie Bortrifluorid oder Bortrifluoridetherate, Antimonpentafluorid, Phosphorpentafluorid, Phosphorpentoxid, Zinnchlorid, Zinnalkyle, Titanhalogenide und Titanalkyle, Trifluoressigsäure, Alkalimetallalkoholate, Butyllithium, Grignard-Verbindungen, Kaliumcarbonat sowie Natriumdiethylmalonat, Natriumdimethylmalonat und Natriumdiethylmethylmalonat. Die Polymerisation kann außerdem in Gegenwart geringer Mengen von Hydroxi- und Cyanidionen erfolgen. Die Initiatoren werden in Mengen von 0,001 bis 15, vorzugsweise 0,01 bis 10 Gew.% eingesetzt. Bevorzugter Polymerisationsinitiator zur Herstellung der Polyacetale ist Phosphorpentoxid.

Um die Polymerisation auszulösen, mischt man Monomere, Initiator und gegebenenfalls das Lösemittel. Das Mischen der Substanzen kann in beliebiger Reihenfolge, absatzweise oder kontinuierlich geschehen. Die Polymerisation wird üblicherweise in dem Temperaturbereich von -100 bis 50, vorzugsweise -70 bis +30°C durchgeführt. Besonders bevorzugt ist der Temperaturbereich von -20 bis +30°C für die Polymerisation. In Abhängigkeit von der Temperatur und dem Initiator dauert die Polymerisation einige Minuten bis zu 8 Tagen, vorzugsweise 1 Stunde bis zu 4 Tagen. Sofern die Monomeren in einem Lösemittel polymerisiert werden, beträgt die Konzentration der Monomeren darin 5 bis 95, vorzugsweise 15 bis 90 Gew.%. Nach der Polymerisation wird das Lösemittel abdestilliert und das Polymere isoliert. Da man als Monomere Formylester einsetzt, enthalten die Polymeren Estergruppierungen, die durch Umsetzung mit Alkalimetallbasen, Ammoniak oder Alkanolaminen in wäßrigem Medium in die entsprechenden Salze der Polyacetale umgewandelt werden können.

Bei der Polymerisation in einem organischen Lösemittel reagiert die wachsende Polyacetalkette mit Lösemittelmolekülen, die daran als Endgruppen angelagert werden und so das Polyacetal gegen einen Abbau im alkalischen pH-Bereich stabilisieren. Solche Endgruppen können beispielsweise Alkyl-, Alkenyl-, Phenyl-, substituiertes Phenyl und Sauerstoff enthaltende Substituenten sein, z.B. Oxyalkylgruppierungen, wie Methoxy-, Ethoxy- und Alkylcarboxygruppen. Geeignete Endgruppen, die zur Stabilisierung der Polyacetale in Betracht kommen, sind beispielsweise ausführlich in der EP-B-0 001 004 für andere Polyacetale angegeben. Die dort gemachten Angaben gelten ebenso für die Polyacetale der vorliegenden Erfindung. Sofern die Polymerisation mit Phosphorpentoxid als Initiator durchgeführt wird, weisen die so erhältlichen Polyacetale Phosphatendgruppen auf.

Die Polyacetale, die Einheiten der Formel I einpolymerisiert enthalten, werden als Zusatz zu phosphatarmen oder phosphatfreien Wasch- und Reinigungsmitteln eingesetzt. Sofern der Substituent M in Formel I eine C₁- bis C₄-Alkylgruppe bedeutet, so hydrolysiert man vorzugsweise die Estergruppen der Polyacetale mit Alkalimetallbasen, Ammcniak oder Alkanolaminen bevor man die Polyacetale als Wasch- und Reinigungsmittelzusatz verwendet. Die Estergruppen enthaltenen Polyacetale können jedoch auch direkt in Wasch- und Reinigungsmitteln eingesetzt werden, weil während des Waschvorgangs eine Hydrolyse der Estergruppen im alkalischen pH-Bereich leicht eintritt. Bevorzugt ist jedoch die vorherige Hydrolyse der Estergruppen bei Temperaturen bis zu 80, vorzugsweise bis zu 60°C. Die dabei anfallenden Salze von Carboxylgruppen tragenden Polyacetalen wirken in Waschmittelformulierungen als Builder, niedrigmolekulare Produkte sind gute Dispergiermittel. Sämtliche erfindungsgemäßen Polyacetale sind biologisch abbaubar.

Die oben beschriebenen Polyacetale werden als Zusatz zu pulverförmigen und flüssigen Waschmitteln und Reinigungsmitteln verwendet, vorzugsweise in phosphatfreien oder phosphatarmen Waschmitteln, die nicht mehr als 25 Gew.-% Natriumtriphosphat enthalten. Die Einsatzmengen an Polyacetalen betragen 0,1 bis 30, vorzugsweise 0,5 bis 15 Gew.%, bezogen auf die Waschmittelformulierung. Die erfindungsgemäß zu verwendenden Polyacetale besitzen ein gutes Dispergiervermögen für Tonmineralien (Clay) in der Waschflotte. Diese Eigenschaft ist deshalb wichtig, weil lehmartige verschmutzungen von Textilgut weit verbreitet sind. Die Polyacetale wirken in Waschmittelformulierungen als Builder, tragen zu einer Waschaktivierung der in den Wasch- und Reinigungsmitteln enthaltenen Tensiden bei und bewirken außerdem während des Waschvorgangs eine Reduktion der Inkrustierung auf dem gewaschenen Textilgut und leisten einen signifikanten Beitrag zu einer Schmutzdispergierung in der Waschflotte. Gegenüber bekannten polymeren Waschmitteladditiven auf Basis von Copolymerisaten aus Acrylsäure und Maleinsäure gemäß der EP-B-0 025 551 besitzen die erfindungsgemäß einzusetzenden Polyacetale den Vorteil, daß sie zu einem hohen Maße biologisch abbaubar sind, z.B. Abbauraten von über 90 % erreichen. Gegenüber den in der EP-PS 00 25 551 als Waschmittelzusatz beschriebenen Copolymerisaten aus Maleinsäure und Acrylsäure weisen die erfindungsgemäß zu verwendenden Polyacetale vor allem eine verbesserte Verträglichkeit in flüssigen Waschmittelformulierungen auf.

Die Zusammensetzung von Waschmittelformulierungen kann sehr unterschiedlich sein. Gleiches gilt für die Zusammensetzung von Reinigungsmittelformulierungen. Wasch- und Reinigungsmittelformulierungen enthalten üblicherweise Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch dargestellt.

Die oben beschriebenen Polyacetale werden erfindungsgemäß in Waschmitteln mit reduziertem Phosphatgehalt (darunter soll ein Phosphatgehalt von weniger als 25 Gew.% Natriumtriphosphat verstanden werden) oder in phosphatfreien Waschmitteln sowie in Reinigungsmitteln eingesetzt. Die Polyacetale können dabei in Form eines Granulats, einer Paste, einer hochviskosen Masse, als Dispersion oder als Lösung in einem Lösemittel der Waschmittelformulierung zugegeben werden. Die Polyacetale können auch an der Oberfläche von Stellmitteln, z.B. Natriumsulfat oder Gerüststoffen (Zeolithen oder Bentoniten) sowie anderen festen Hilfsstoffen der Waschmittelformulierung adsorbiert werden.

Waschmittelformulierungen und Reinigungsmittelformulierungen sind pulverförmig oder flüssig. Sie können regional und gemäß dem speziellen Anwendungszweck verschieden zusammengesetzt sein.

Universalhaushaltswaschmittel für Trommelwaschmaschinen, wie sie in Europa weit verbreitet sind, enthalten gewöhnlich 5 bis 10 Gew.% Aniontenside; 1 bis 5 Gew.% nichtionische Tenside; 1 bis 5 Gew.% Schaumregulatoren, wie Silikonöle oder Seifen; 0 bis 40 Gew.% Enthärtungsmittel, wie Soda oder Pentanatriumtriphosphat, das durch die erfindungsgemäßen Verbindungen teilweise oder ganz ersetzt werden kann; 0 bis 30 Gew.% Ionenaustauscher, wie Zeolith A; 2 bis 7 Gew.% Natriumsilikate als Korrosionsinhibitoren; 10 bis 30 Gew.% Bleichmittel, wie Natriumperborat, Natriumpercarbonat organische Persäuren oder deren Salze; 0 bis 5 Gew.% Bleichaktivatoren, wie Tetraacetylethylendiamin, Pentaacetylglucose, Hexaacetylsorbit oder Acyloxibenzolsulfonat; Stabilisatoren, wie Magnesiumsilikat oder Ethylendiamintetraacetat; Vergrauungsinhibitoren, wie Carboximethylcellulose, Methyl- und Hydroxialkylcellulosen, mit Vinylacetat gepfropfte Polyglykole, oligomere und polymere Terephthalsäure/Ethylenglykol/Polyethylenglykol-Ester; Enzyme; optische Aufheller; Duftstoffe; Weichmacher; Farbstoffe und Stellmittel.

Im Gegensatz hierzu sind die Heavy Duty Detergents, die in den USA, Japan und diesen Ländern benachbarten Staaten in den Bottichwaschmaschinen verwendet werden, meist frei von Bleichmitteln, ihr Anteil an Aniontensiden ist dafür zwei bis dreimal so hoch, sie enthalten mehr Waschalkalien, wie Soda und Natriumsilikate (in der Regel bis zu 25 Gew.%) und zumeist fehlen ihnen auch die Bleichaktivatoren und Bleichstabilisatoren. Die Gehaltsangaben für Tenside und andere Inhaltsstoffe können sich noch beträchtlich erhöhen, wenn es sich um sogenannte Waschmittelkonzentrate handelt, die stellmittelfrei oder stellmittelarm in den Handel kommen. Fein- und Buntwaschmittel, Wollwaschmittel und Mittel für die manuelle Wäsche enthalten ebenfalls meist kein Bleichmittel und geringe alkalische Bestandteile bei entsprechend erhöhtem Tensidanteil.

Waschmittel für den gewerblichen Sektor sind auf die speziellen Verhältnisse des industriellen Waschens zugeschnitten (weiches Wasser, kontinuierliches Waschen), die es gestatten, schwerpunkt-mäßig auf die Art des Waschguts und der Verschmutzung einzugehen. Es werden daher Kombinationen verwendet, in denen ein Bestandteil vorherrscht oder andere ganz fehlen, die bei Bedarf getrennt zudosiert werden. Deshalb variieren die Bestandteile Tenside, Builder (Gerüststoffe), Alkalien und Bleichmittel dieser Waschmittel in weiten Grenzen.

Geeignete anionische Tenside für die vorgenannten Pulverwaschmittel sind beispielsweise Natriumalkylbenzolsulfonate, Fettalkoholsulfate und Fettalkoholpolyglykolethersulfate. Einzelne Verbindungen dieser Art sind beispielsweise C₈- bis C₁₂-Alkylbenzolsulfonate, C₁₂- bis C₁₆-Alkansulfonate, C₁₂- bis C₁₆-Alkylsulfate, C₁₂- bis C₁₆-Alkylsulfosuccinate und sulfatierte ethoxylierte C₁₂- bis C₁₆-Alkanole. Als anionische Tenside eignen sich außerdem sulfatierte Fettsäurealkanolamine, α-Sulfofettsäureester, Fettsäuremonoglyceride oder Umsetzungsprodukte von 1 bis 4 Mol Ethylenoxid mit primären oder sekundären Fettalkoholen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isethionate. Die anionischen Tenside können in Form der Natrium-, Kalium- und Ammoniumsalze sowie als lösliche Salze organischer Basen, wie Mono-, Di- oder Triethanolamin oder anderen substituierten Aminen vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Die obengenannten Anlagerungsprodukte des Ethylenoxids können gegebenenfalls zusätzlich bis zu 90 Gew.-%, bezogen auf einkondensiertes Ethylenoxid und Propylenoxid, Propylenoxid einkondensiert enthalten. Die Anlagerungsprodukte, die Ethylenoxid und Propylenoxid einkondensiert enthalten, können gegebenenfalls durch Einkondensieren von Butylenoxid in Mengen bis zu 60 Gew.-%, bezogen auf den Gesamtgehalt an Alkylenoxid, modifiziert sein. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert.

Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Weitere Mischungsbestandteile von Waschmitteln können auch monomere, oligomere und polymere Phosphonate, Ethersulfonate auf der Basis von ungesättigten Fettalkoholen, z.B. Oleylalkoholethoxylatbutylether und deren Alkalisalze sein. Diese Stoffe können z.B. mit Hilfe der Formel RO(CH₂CH₂O)ₙ-C₄H₈-SO₃Na, in der n = 5 bis 40 und R = Oleyl ist, charakterisiert werden.

Die oben beschriebenen Polyacetale können auch als Zusatz zu Flüssigwaschmitteln verwendet werden. Die Flüssigwaschmittel enthalten als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Polyacetale mit den übrigen Bestandteilen des Flüssigwaschmittels nicht direkt mischbar sind, kann man mit Hilfe geringer Menge an Lösungsvermittlern, z.B. Wasser oder eines mit Wasser mischbaren organischen Lösemittels, z.B. Isopropanol, Methanol, Ethanol, Glykol, Diethylenglykol oder Triethylenglykol oder entsprechende Propylenglykole, homogene Mischungen herstellen. Die Tensidmenge in Flüssigwaschmitteln beträgt 4 bis 50 Gew.%, bezogen auf die gesamte Formulierung, da auch bei den Flüssigwaschmitteln je nach den regionalen Marktgegebenheiten oder dem Anwendungszweck die Anteile der Bestandteile in weiten Grenzen variieren.

Die Flüssigwaschmittel können Wasser in Mengen von 10 bis 60, vorzugsweise 20 bis 50 Gew.% enthalten. Sie können aber auch wasserfrei sein.

Wasserfreie Flüssigwaschmittel können auch Peroxoverbindungen zum Bleichen in suspendierter oder dispergierter Form enthalten. Als Peroxoverbindungen seien z.B. genannt: Natriumperborat, Peroxocarbonsäuren und Polymere mit teilweise peroxohaltigen Gruppen. Außerdem können die Flüssigwaschmittel gegebenenfalls Hydrotrope enthalten. Hierunter werden Verbindungen verstanden wie 1,2-Propandiol, Cumolsulfonat und Toluolsulfonat. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.%. In vielen Fällen hat sich zur Modifizierung von pulverförmigen und flüssigen Waschmitteln auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyethandiphosphonsäure, Ethylendiamintetraethylenphosphonsäure und deren Salze. Die Komplexbildner werden in Mengen von 0 bis 10 Gew.%, bezogen auf die Waschmittel, eingesetzt. Die Waschmittel können außerdem Zitrate, Di- oder Triethanolamin, Trübungsmittel, optische Aufheller, Enzyme, Parfümöle und Farbstoffe enthalten. Diese Stoffe sind, falls sie zur Modifzierung der Flüssigwaschmittel verwendet werden, zusammen in Mengen bis zu 5 Gew.% anwesend. Die Waschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Waschmittels bis zu 45, vorzugsweise bis zu 25 Gew.%.

Die erfindungsgemäß zu verwendenden Polyacetale können auch mit anderen bekannten Waschmitteladditiven (wie z.B. Vergrauungsinhibitoren, Claydispergatoren und Stoffen, die die Primärwaschwirkung verstärken, Farbübertragungsinhibitoren, Bleichaktivatoren) in Pulver- und Flüssigwaschmitteln (phosphathaltig und phosphatfrei) synergistische Effekte hervorrufen, bei denen nicht nur die Partikelschmutzdispergierung, sondern auch die Wirkung des anderen Waschmitteladditivs verstärkt werden kann.

Die Prozentangaben in den Beispielen bedeuten Gewichtsprozent. Die K-Werte der Polyacetale wurden nach H. Fikentscher, Cellulosechemie, Band 13, 58-64 und 71-74 (1932) in wäßriger Lösung bei einer Temperatur von 25°C und einer Konzentration von 1 Gew.% bei pH 7 am Natriumsalz der Polyacetale bestimmt.

### Beispiele

### Beispiel 1

In einem 100 ml fassenden Kolben wurden 50 ml Tetrahydrofuran und 2 g (14,1 mmol) Phosphorpentoxid unter einer Argonatmosphäre vorgelegt. Innerhalb von 15 Minuten gab man 22,2 g (191,4 mmol) β-Formylpropionsäuremethylester bei 20°C zu und rührte das Reaktionsgemisch anschließend 92 Stunden bei 20°C. Danach entfernte man das Lösemittel im Vakuum. Als Rückstand verblieb ein hellgelber Brei, der unter Eiskühlung langsam mit 25 %iger wäßriger Natronlauge versetzt wurde. Die Reaktionsmischung wurde anschließend 10 Stunden bei pH 8 bis 9 belassen, dann aufkonzentriert und das Polymere durch Zugabe von Ethanol ausgefällt. Man erhielt Poly-β-formylpropionsäure als Natriumsalz in Form eines weißen Pulvers, das im Vakuum getrocknet wurde. Das Polymer hatte einen K-Wert von 18,7.

### Beispiel 2

In dem in Beispiel 1 beschriebenen Kolben wurden 40 ml Dichlormethan und 22,2 g (191,4 mmol) β-Formylpropionsäuremethylester vorgelegt und unter Argonatmosphäre auf eine Temperatur von -70°C abgekühlt. Anschließend fügte man 0,3 g (2,1 mmol) Bortrifluoridetherat zu und rührte das Reaktionsgemisch 4 Stunden bei -70°C. Nach Beendigung der Polymerisation fügte man 2,3 g (28,9 mmol) Pyridin zu, erwärmte das Reaktionsgemisch auf Raumtemperatur und destillierte das Lösemittel im vakuum ab. Man erhielt ein farbloses, klares Produkt, das auf 0°C abgekühlt und langsam mit 25 g (156 mmol) 25 %iger wäßriger Natronlauge versetzt wurde. Das Reaktionsgemisch wurde 5 Stunden bei 0°C belassen, dann auf Raumtemperatur erwärmt und weitere 18 Stunden bei dieser Temperatur belassen. Man erhielt durch Fällung in Ethanol ein beigefarbenes Polymersalz. Das Polymere hatte einen K-Wert von 10,7.

### Beispiel 3

In der in Beispiel 1 beschriebenen Apparatur wurden 0,27 g (1,9 mmol) Phosphorpentoxid und 50 ml Tetrahydrofuran unter Argonatmosphäre vorgelegt. Bei einer Temperatur von 20°C gab man anschließend 22,2 g (191,4 mmol) β-Formylpropionsäuremethylester langsam zu und rührte das Reaktionsgemisch 96 Stunden bei 20°C. Danach destillierte man das Lösemittel im Vakuum ab, fügte dann 10 ml Dichlormethan, 3,7 ml 2 N wäßrige Natronlauge und 30 ml gesättigte Natriumhydrogencarbonat-Lösung zu und rührte die Mischung 15 Minuten. Die wäßrige Phase wurde dann abdekantiert und die organische Phase 2 mal mit je 30 ml gesättigter wäßriger Natriumhydrogencarbonat-Lösung gewaschen. Danach wurde die organische Phase auf 0°C gekühlt mit 25 ml 10 N wäßriger Natronlauge versetzt und 2 Stunden bei Raumtemperatur gerührt. Man erhielt ein hellgelbes Öl, zu dem man 40 ml Ethanol zufügte und die Mischung anschließend 30 Minuten rührte. Das Polymere schied sich in fester Form ab. Die überstehende Lösung wurde abdekantiert, der Niederschlag aufgelöst und das Polymere aus Methanol gefällt. Die so erhaltene Poly-β-formylpropionsäure lag als Natriumsalz in Form eines beige-farbenen Pulvers vor und hatte einen K-Wert von 10,9.

### Beispiel 4

In der in Beispiel 1 angegebenen Apparatur wurden 4,0 g (28,2 mmol) Phosphorpentoxid und 50 ml Tetrahydrofuran unter Argonatmosphäre vorgelegt. Dazu gab man dann langsam 22,2 g (191,4 mmol) β-Formylpropionsäuremethylester zu und rührte das Reaktionsgemisch 72 Stunden bei 20°C. Danach destillierte man das Lösemittel im Vakuum ab und versetzte den Rückstand mit 54,4 ml 2 N wäßriger Natronlauge und 30 ml gesättigter Natriumhydrogencarbonatlösung und 150 ml Wasser. Das Polymere wurde abgesaugt und 2 mal mit je 30 ml gesättigter wäßriger Natriumhydrogencarbonatlösung und anschließend noch einmal mit Wasser gewaschen. Anschließend wurde das Polymere auf 0°C gekühlt und tropfenweise mit 25 ml 10 N wäßriger Natronlauge bei einer Temperatur von 25°C verseift. Man erhielt Poly-β-formylpropionsäure in Form des Polynatriumsalzes, das durch Zugabe von Ethanol als hellgelbes Pulver vom K-Wert 15,3 gefällt wurde.

### Beispiel 5

In der in Beispiel 1 beschriebenen Apparatur wurden 23,2 g (0,20 mol) β-Formylpropionsäuremethylester und 4,5 ml Dichlormethan unter Argon vorgelegt und auf eine Temperatur von 0°C abgekühlt. Zu dieser Mischung tropfte man 150 µl einer 0,05 N Lösung von Natrium-diethylmalonat in Tetrahydrofuran und rührte das Reaktionsgemisch 30 Minuten bei 0°C. Danach fügte man nochmals die selbe Menge an Natrium-diethylmalonat in Tetrahydrofuran zu (insgesamt 0,015 mmol) und rührte die Mischung 20 Stunden bei 0°C. Anschließend fügte man 4,6 g (60,5 mmol) Dimethoxymethan, 4,4 g (31 mmol) Phosphorpentoxid und anschließend nochmals die gleiche Menge an Dimethoxymethan zu. Die Mischung wurde dann 20 Stunden bei 0°C gerührt und danach mit 60 ml 2 N Natronlauge versetzt. Man dekantierte die wäßrige Phase ab und wusch die organische Phase 3 mal mit je 50 ml gesättigter wäßriger Natriumhydrogencarbonatlösung aus. Der Rückstand wurde tropfenweise mit 25 g 25 %iger wäßriger Natronlauge tropfenweise versetzt, wobei die Temperatur bis auf maximal 40°C anstieg, und 2 Stunden gerührt. Man fügte 40 ml Methanol zu, konzentrierte die Mischung im Vakuum der Wasserstrahlpumpe auf und versetzte anschließend mit Ethanol. Man erhielt Poly-β-formylpropionsäure in Form des Polynatriumsalzes als weißes Pulver vom K-Wert 11.

### Beispiel 6

In der in Beispiel 1 beschriebenen Apparatur wurden 2,0 g (14,1 mmol) Phosphorpentoxid unter Argonatmosphäre vorgelegt und unter Rühren mit 50 ml Tetrahydrofuran versetzt. Bei Raumtemperatur fügte man dann langsam 22,72 g (195,9 mmol) α-Formylpropionsäuremethylester zu und rührte das Reaktionsgemisch 72 Stunden bei 20°C. Danach destillierte man das Lösemittel im Vakuum ab und gab 27 ml 2 N Natronlauge zum Rückstand. Dieses Gemisch wurde 15 Minuten gerührt, dann mit 50 ml Wasser versetzt und die überstehende Lösung abdekantiert. Der Rückstand wurde mit 100 ml gesättigter wäßriger Natriumhydrogencarbonatlösung und danach mit 100 ml Wasser gewaschen. Anschließend wurde er unter Eiskühlung mit 20 ml 10 N Natronlauge versetzt und 2 Stunden bei Raumtemperatur gerührt. Das Polymere wurde durch Zugabe einer Mischung aus Ethanol und Aceton im Gewichtsverhältnis 1:1 gefällt und danach getrocknet. Man erhielt Poly-α-formylpropionsäure in Form des Polynatriumsalzes mit einem K-Wert von 14,2.

### Beispiel 7

In der in Beispiel 1 beschriebenen Apparatur wurden 2,0 g (14,1 mmol) Phosphorpentoxid und 50 ml Tetrahydrofuran unter Argonatmosphäre vorgelegt und langsam mit 24,74 g (142,2 mmol) Formylbernsteinsäuredimethylester versetzt. Das Reaktionsgemisch wurde dann 120 Stunden bei Raumtemperatur gerührt. Man erhielt ein viskoses Öl, das von einer geringen Menge an weißem Feststoff abdekandiert wurde. Der Feststoff wurde zweimal mit je 40 ml Tetrahydrofuran gewaschen und die Waschlösungen mit abdekandiertem Öl vereinigt. Das Lösemittel wurde anschließend im Vakuum abdestilliert und unter Rückstand auf 0°C abgekühlt. Bei dieser Temperatur wurde dann soviel 25 %ige wäßrige Natronlauge zugefügt, bis ein pH-Wert von 8,5 erreicht war. Dann wurden noch 20 ml Wasser zugesetzt und die Mischung 18 Stunden bei 0°C stehengelassen. Das Polymere wurde aus einer Mischung von Aceton und Ethanol im Volumenverhältnis von 9:1 ausgefällt. Es hatte einen K-Wert von 12,4.

### Vergleichsbeispiel 1 (gemäß US-A-4 224 420, Beispiel 2)

In der unter Beispiel 1 beschriebenen Apparatur wurden 8 ml frisch destilliertes Dichlormethan und 16 ml (20,0 g, 0,22 mol) Glyoxylsäure-methylester vorgelegt und auf 0°C abgekühlt. Bei dieser Temperatur wurden 0,2 g regeneriertes Molekularsieb (3Å) zugegeben. Nach Reaktionsende wurde die Reaktionsmischung auf Raumtemperatur erwärmt. Zu dieser Lösung wurden 7 ml Ethylvinylether getropft und über Nacht gerührt. Es wurden 30 ml Toluol zugefügt, 10 Minuten aufgerührt und die Oberphase anschließend abdekantiert. Der Waschvorgang wurde mit 20 ml Toluol wiederholt. Zurück blieb ein weißes viskoses Produkt, das mit 20 ml 0,1 N Natronlauge versetzt und 20 Minuten gerührt wurde. Die Oberphase wurde erneut abdekantiert. Tropfenweise wurden dasn 20 ml 10 M Natronlauge zugegeben, wobei die Innentemperatur auf maximal 45°C stieg. Die Verseifung wurde 90 Minuten lang durchgeführt und das Produkt in Methanol gefällt. Das erhaltene weiße Pulver wurde im Vakuum getrocknet. Es besaß einen K-Wert von 11,9.

### Vergleichsbeispiel 2

### Natriumsalz der monomeren β-Formylpropionsäure

In der unter Beispiel 1 beschriebenen Apparatur wurden 20 ml des Monomers β-Formylpropionsäure-methylester auf 0°C abgekühlt und tropfenweise mit 25 %iger Natronlauge versetzt bis ein pH-Wert von 8 bis 9 erreicht war. Es wurde 15 h bei Raumtemperatur weitergerührt, das Na-Salz dann aus Ethanol gefällt und im Vakuum getrocknet.

### Beispiel 8

In der unter Beispiel 1 beschriebenen Apparatur wurden 2,0 g (14,1 mmol) Phosphorpentoxid vorgelegt und 50 ml Diethylenglykol-dimethylether zugegeben. In 15 Minuten wurden 20 ml (22,2 g, 191,4 mmol) β-Formylpropionsäure-methylester zugetropft und 96 h bei Raumtemperatur belassen. Die Reaktionsmischung wurde auf 0°C abgekühlt und langsam mit 30 g 25 %iger Natronlauge versetzt. Nach 6 h bei Raumtemperatur wurden die gebildeten Phasen getrennt und die untere Phase in Ethanol gefällt. Das Produkt mit einem K-Wert von 9,4 wurde im Vakuum getrocknet.

### Beispiel 9

Unter Argon wurden in der unter Beispiel 1 beschriebenen Apparatur 0,81 g (5,7 mmol) Phosphorpentoxid vorgelegt und 50 ml Dimethylglykol zugefügt. In 5 Minuten wurden zu dieser Mischung 20 ml (22,2 g, 191,4 mmol) β-Formylpropionsäure-methylester gefügt und 94 h bei Raumtemperatur gerührt. Nach Abkühlen der Reaktionsmischung auf 0°C wurden tropfenweise 25 ml 25 %ige Natronlauge zugegeben und 5 h bei Raumtemperatur belassen. Die resultierenden 2 Phasen wurden getrennt, die untere Phase in Methanol/Aceton 2:1 gefällt und der Niederschlag im Vakuum getrocknet. Das Produkt besaß einen K-Wert von 10,2.

### Beispiel 10

Unter Argon wurden in der unter Beispiel 1 beschriebenen Apparatur 0,27 g (1,9 mmol) Phosphorpentoxid vorgelegt und anschließend unter Rühren 20 ml (22,2 g, 191,4 mmol) β-Formylpropionsäuremethylester zugegeben. Es war eine exotherme Reaktion zu beobachten. Die Reaktionsmischung wurde 90 h bei Raumtemperatur belassen, dann vom Bodensatz abdekantiert und die ölige Phase bei 0°C tropfenweise mit 25 ml 25 %iger Natronlauge versetzt. Nach 5-stündigem Rühren bei Raumtemperatur wurde das Produkt in Methanol/Aceton 2:1 gefällt. Nach Abfiltrieren und Trocknen im Vakuum wurde der K-Wert des Produkts mit 9,0 bestimmt.

### Beispiel 11

Unter Argon wurden in der unter Beispiel 1 beschriebenen Apparatur 20 ml (22,2 g, 191,4 mmol) β-Formylpropionsäuremethylester vorgelegt und 3,3 µl Triethylamin zugefügt. Es wurde 3 h bei Raumtemperatur gerührt, dann 47 h bei 50°C und anschließend nochmals 3,3 µl Triethylamin zugegeben. Die Reaktionstemperatur wurde auf 90°C erhöht und die Mischung 27 h bei dieser Temperatur belassen. Danach wurde auf 0°C abgekühlt, tropfenweise mit 50 %iger Natronlauge versetzt und 5 h nachgerührt. Das Produkt wurde in Methanol gefällt, abfiltriert und im Vakuum getrocknet. Der K-Wert betrug 9,9.

### Beispiel 12

In der unter Beispiel 1 beschriebenen Apparatur wurden 2,0 g (14,1 mmol) Phosphorpentoxid vorgelegt und 50 ml Dimethylglykol zugegeben. In 15 Minuten wurden dazu 20 ml (22,2 g, 191,4 mmol) β-Formylpropionsäure-methylester zugetropft und 96 h bei Raumtemperatur belassen. Die Reaktionsmischung wurde auf 0°C gekühlt und tropfenweise 30 g 25 %ige Natronlauge zugefügt. Es wurde 6 h bei Raumtemperatur nachgerührt. Danach wurden die Phasen getrennt und die untere Phase in Ethanol gefällt. Das Produkt wurde im Vakuum getrocknet und besaß einen K-Wert von 9,6.

### Beispiel 13

Unter Argon wurden in der unter Beispiel 1 beschriebenen Apparatur 2,0 g (14,1 mmol) Phosphorpentoxid und 50 ml Tetrahydrofuran vorgelegt und 20 ml (22,2 g, 191,4 mmol) β-Formylpropionsäuremethylester zugegeben, während der Versuch auf -70°C abgekühlt wurde. Es wurde 16 h bei -70°C gerührt und danach bei 0°C 25 ml 25 %ige Natronlauge zugetropft. Nach 5-stündigem Rühren bei Raumtemperatur wurde das Lösemittel Tetrahydrofuran im Vakuum abdestilliert und das Produkt in Methanol gefällt. Nach Abfiltrieren wurde das Produkt im Vakuum getrocknet. Das weiße Pulver besaß einen K-Wert von 10,9.

### Beispiel 14

In der unter Beispiel 1 beschriebenen Apparatur wurden 2,0 g (14,1 mmol) Phosphorpentoxid und 50 ml Dioxan vorgelegt und 20 ml (22,2 g, 191,4 mmol) β-Formylpropionsäure-methylester zugegeben. Nach einer Reaktionszeit von 72 h bei Raumtemperatur wurden tropfenweise 25 ml 25 %ige Natronlauge zugefügt. Die entstandenen 2 Phasen wurden getrennt und die untere Phase in Methanol/Aceton 2:1 gefällt. Das Produkt wurde im Vakuum getrocknet und besaß einen K-Wert von 9,5.

### Beispiel 15

In der unter Beispiel 1 beschriebenen Apparatur wurden 2,0 g (14,1 mmol) Phosphorpentoxid und 50 ml Toluol vorgelegt und 20 ml (22,2 g, 191,4 mmol) β-Formylpropionsäure-methylester zugegeben. Nach einer Reaktionszeit von 72 h bei Raumtemperatur wurden tropfenweise 25 ml 25 %ige Natronlauge zugefügt. Die entstandenen 2 Phasen wurden getrennt und die untere Phase in Methanol/Aceton 2:1 gefällt. Das Produkt wurde im Vakuum getrocknet und besaß einen K-Wert von 9,4.

### Anwendungstechnische Beispiele

### Clay-Dispergierung

Die Entfernung von Partikelschmutz von Gewebeoberflächen wird durch Zusatz von Polyelektrolyten unterstützt. Die Stabilisierung der nach der Ablösung der Partikel von der Gewebeoberfläche entstehenden Dispersion ist eine wichtige Aufgabe dieser Polyelektrolyte. Der stabilisierende Einfluß der anionischen Dispergiermittel ergibt sich dadurch, daß infolge von Adsorption von Dispergiermittelmolekülen auf der Feststoffoberfläche deren Oberflächenladung vergrößert und die Abstoßungsenergie erhöht wird. Weitere Einflußgrößen auf die Stabilität einer Dispersion sind ferner u.a. sterische Effekte, Temperatur, pH-Wert und die Elektrolytkonzentration.

Mit dem im folgenden beschriebenen Clay-Dispergiertest (CD-Test) kann auf einfache Weise die Dispergierfähigkeit verschiedener Polyelektrolyte beurteilt werden.

### CD-Test

Als Modell für partikulären Schmutz wird feingemahlener China-Clay SPS 151 benutzt. 1 g Clay wird unter Zusatz von 1 ml einer 0,1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60-minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, um so höher sind die gemessenen Trübungswerte, und um so stabiler ist die Dispersion. Als zweite physikalische Meßgröße wird die Dispersionskonstante τ bestimmt, die das zeitliche Verhalten des Sedimentationsprozesses beschreibt. Da der Sedimentationsprozep annähernd durch ein monoexponentielles Zeitgesetz beschrieben werden kann, gibt τ die Zeit an, in der die Trübung auf 1/e-tel des Ausgangszustandes zum Zeitpunkt t = 0 abfällt.

Je höher ein Wert für τ ist, um so langsamer setzt sich die Dispersion ab.

Der CD-Test wurde für die gemäß den Beispielen 8 bis 15 erhaltenen Na-Salze der Polymeren durchgeführt. Die dabei gefundenen Ergebnisse sind in der folgenden Tabelle mit den Ergebnissen der vergleichsbeispiele angegeben.

| Beispiel | Reaktionsprodukt erhalten gemäß Beispiel | Trübung nach Lagerung [NTU] | | | Dispersionskonstante τ [min] |
|---|---|---|---|---|---|
| | | sofort | 30 min. | 60 min. | |
| 16 | 8 | 680 | 600 | 530 | 240,7 |
| 17 | 9 | 680 | 630 | 570 | 346,9 |
| 18 | 10 | 730 | 640 | 600 | 341,4 |
| 19 | 11 | 700 | 630 | 550 | 253,7 |
| 20 | 12 | 690 | 620 | 580 | 362,7 |
| 21 | 13 | 740 | 610 | 540 | 197,4 |
| 22 | 14 | 740 | 620 | 580 | 300,7 |
| 23 | 15 | 750 | 640 | 600 | 319,3 |
| | | | | | |

| Vergleichsbeispiel | Vergleichsbeispiel | | | | |
|---|---|---|---|---|---|
| 1 | 1 | 570 | 470 | 400 | 169,8 |
| 2 | 2 | 630 | 40 | 35 | 36,2 |
| 3 | - | 600 | 37 | 33 | 41,4 |

Den Meßwerten ist zu entnehmen, daß man mit den erfindungsgemäß zu verwendenden Polyacetalen Dispersionen erhält, die nach 60-minütiger Standzeit deutlich höhere Trübungswerte aufweisen als die angegebenen Vergleiche. Zusammen mit den deutlich höheren Dispersionskonstanten bedeutet dies, daß die erfindungsgemäß zu verwendenden Polyacetale Clay besser dispergieren können und gleichzeitig die Herstellung von Dispersionen mit verbesserter Lagerstabilität erlauben. übertragen auf Waschprozesse bedeutet dies eine Verbesserung der Primärwaschleistung (bessere Schmutzentfernung) und gleichzeitig durch Ausbildung stabiler Dispersionen eine verringerte Gefahr der Wiederanschmutzung der gewaschenen Gewebe durch den in der Waschflotte vorhandenem im ersten Teilschritt abgewaschenen Schmutz.

## Patentansprüche

1. Verwendung von Polyacetalen, die Einheiten der Formel 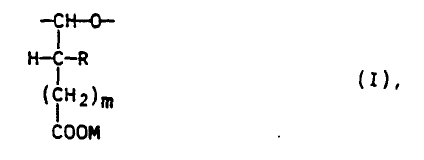 in der
R = H, C₁- bis C₄-Alkyl, COOM,
M = C₁- bis C₄-Alkyl, Alkalimetall-, Ammonium- und Alkanolamingruppe, und
m = 0 bis 9
bedeuten, und die gegebenenfalls bis zu 50 mol-% mindestens eines Comonomers aus der Gruppe der C₁- bis C₁₀-Aldehyde, C₂- bis C₄-Alkylenoxide, Epihalogenhydrine, Epoxybernsteinsäure und Verbindungen der Formel 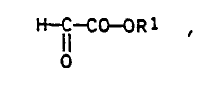 in der
R¹ = C₁- bis C₄-Alkyl
bedeutet, einpolymerisiert enthalten und K-Werte (bestimmt nach H. Fikentscher in 1 gew.-%iger wäßriger Lösung bei 25°C und pH 7 am Natriumsalz) von mindestens 8,5 haben, als Zusatz zu Waschmitteln mit reduziertem Phosphatgehalt von weniger als 25 Gew.-% Natriumtriphosphat oder phosphatfreien Wasch- und Reinigungsmitteln in Mengen von 0,1 bis 30 Gew.-%, bezogen auf die jeweiligen Formulierungen.

## Claims

1. The use of polyacetals which contain units of the formula 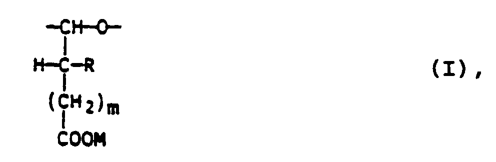 where
R is hydrogen, C₁-C₄-alkyl or COON,
M is C₁-C₄-alkyl or an alkali metal, ammonium or alkanolamine group, and
m is from 0 to 9,
and optionally up to 50 mol% of at least one comonomer selected from the group consisting of the C₁-C₁₀-aldehydes, C₂-C₄-alkylene oxides, epihalohydrins, epoxysuccinic acid and compounds of the formula 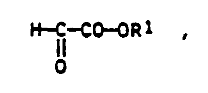 where R¹ is C₁-C₄-alkyl, in copolymerized form,
and have K values (determined by the method of H. Fikentscher on the sodium salt in 1% strength by weight aqueous solution at 25°C and pH 7) of at least 8.5, as additament in washing compositions having a reduced phosphate content of less than 25% by weight of sodium triphosphate or phosphate-free washing and cleaning compositions in amounts of from 0.1 to 30% by weight, based on the respective formulations.

## Revendications

1. Utilisation de polyacétals qui contiennent en liaison polymère des motifs de formule 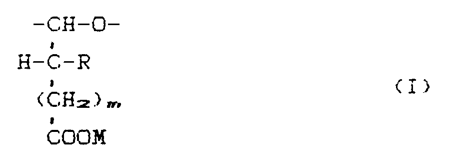 dans laquelle
R = H, reste alkyle en C₁-C₄, COOM
M = reste alkyle en C₁-C₄, métal alcalin, groupement ammonium ou alcanolamine, et
m = 0 à 9,
contiennent éventuellement en liaison polymère jusqu'à 50% en moles d'au moins un comonomère du groupe des aldéhydes en C₁-C₁₀, des oxydes d'alkylène en C₂-C₄, des épihalogénhydrines, de l'acide époxysuccinique et des composés de formule 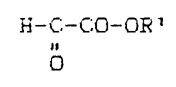 dans laquelle
R¹ = reste alkyle en C₁-C₄,
et ont des valeurs K (déterminées d'après H. Fikentscher en solution aqueuse à 1% en poids, à 25°C et à un pH de 7 sur le sel de sodium) d'au moins 8,5,
comme additif à des produits de lavage ayant une teneur en phosphates réduite à moins de 25% en poids de triphosphate de sodium ou à des produits de lavage et de nettoyage dépourvus de phosphates, dans des proportions de 0,1 à 30% en poids par rapport aux compositions en question.
